Europäisches Patentamt

European Patent Office

Office européen des brevets

(11) Numéro de publication: **0 500 407 B1**

# FASCICULE DE BREVET EUROPEEN

(45) Date de publication de fascicule du brevet: **14.06.95**  (51) Int. Cl.⁶: **A62B 9/02**, G05D 16/02

(21) Numéro de dépôt: **92400253.8**

(22) Date de dépôt: **31.01.92**

(54) **Procédé et dispositif de régulation d'une pression de gaz et système de fourniture de gaz comprenant un tel dispositif.**

(30) Priorité: **14.02.91 FR 9101737**

(43) Date de publication de la demande:
**26.08.92 Bulletin 92/35**

(45) Mention de la délivrance du brevet:
**14.06.95 Bulletin 95/24**

(84) Etats contractants désignés:
**DE ES FR GB IT**

(56) Documents cités:
**EP-A- 0 375 281**
**US-A- 1 895 047**

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07 (FR)**

(72) Inventeur: **Zapata, Richard**
**9, Impasse de la Prairie**
**F-38360 Sassenage (FR)**
Inventeur: **Arnault, Jean**
**Cidex 939**
**F-38330 Saint Nazaire les Eymes (FR)**

(74) Mandataire: **Le Moenner, Gabriel et al**
**L'AIR LIOUIDE, Société Anonyme**
**pour l'étude et l'exploitation des procédés**
**Georges Claude**
**75, Ouai d'Orsay**
**F-75321 Paris Cédex 07 (FR)**

## Description

La présente invention concerne un dispositif et un procédé de régulation de pression de gaz délivré à un poste utilisateur par une ligne de fourniture de gaz provenant d'une source de gaz du genre décrit dans le document EP-A-0375281.

Les dispositifs connus de ce type mettent classiquement en oeuvre une vanne de régulation interposée dans la ligne de fourniture de gaz, un capteur de pression relié à un point de la ligne en aval de la vanne, et une logique de commande actionnant la vanne. Lorsque, pour réguler la pression dans un volume à débit continu ou à débit nul, le capteur de pression peut être installé dans ou au voisinage immédiat du poste utilisateur, la régulation peut s'effectuer avec précision et sans problème. On rencontre toutefois des systèmes de fourniture de gaz où, notamment pour des conditions d'encombrement ou d'interchangeabilité des éléments aval du système, le capteur ne peut être physiquement installé au voisinage du poste utilisateur mais largement en amont de celui-ci, de sorte que les pertes de charge entre le capteur et le poste utilisateur deviennent importantes. Dans de telles conditions, dans le cas d'une régulation avec débit continu, l'asservissement donnera une pression systématiquement trop faible dans le poste utilisateur et, dans le cas d'un asservissement rapide avec un débit de fourniture faible ou nul, il y aura d'abord une fermeture de la vanne de régulation quand la pression de consigne sera atteinte, suivie d'une réouverture quand les pressions seront équilibrées. On peut envisager de corriger électroniquement le signal de pression fourni par le capteur pour tenter de restituer au poste utilisateur les valeurs de consigne attendues, mais cette correction est extrêmement délicate à réaliser car elle dépend du débit instantané qui est variable et en général difficilement mesurable.

La présente invention telle que décrite dans les revendications 1 et 10 a pour objet de proposer un dispositif et un procédé de régulation permettant d'effectuer une telle correction de façon simple, efficace et fiable, peu onéreuse et rapide à mettre en oeuvre.

Pour ce faire, selon une caractéristique de l'invention, le capteur de pression est relié à la ligne par une prise de pression faisant saillie dans la ligne et orientable angulairement par rapport au flux de gaz dans la ligne, la prise de pression comprenant avantageusement un tube rotatif, disposé transversalement dans la ligne et comportant au moins un orifice dans sa paroi périphérique, cet orifice étant relié au capteur de pression.

Selon une autre caractéristique de l'invention, le procédé comprend l'étape d'orienter la prise de pression par rapport au flux de gaz dans la ligne pour simuler la perte de charge dans la portion de ligne entre la prise de pression et le poste utilisateur et corriger ainsi la pression lue par le capteur.

La présente invention concerne également un système de fourniture de gaz respiratoire à un passager d'aéronef incorporant un dispositif de régulation du type défini ci-dessus.

D'autres caractéristiques et avantages de la présente invention ressortiront de la description suivante d'un mode de réalisation, donné à titre illustratif mais nullement limitatif, faite en relation avec les dessins annexés, sur lesquels :

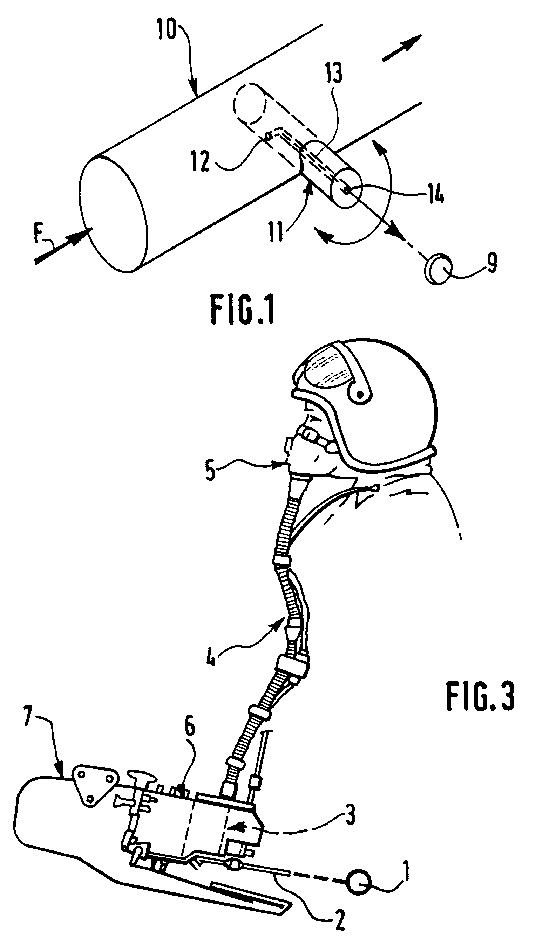

- la figure 1 représente schématiquement une prise de pression orientable pour la mise en oeuvre du procédé selon l'invention ;
- la figure 2 est une vue schématique, en coupe partielle, d'un système de fourniture de gaz respiratoire à un passager d'aéronef incorporant un dispositif selon l'invention ; et
- la figure 3 est une vue schématique de l'implantation d'un système embarqué selon la figure 2.

Dans la description qui va suivre et sur les dessins, les éléments identiques ou analogues portent les mêmes chiffres de référence.

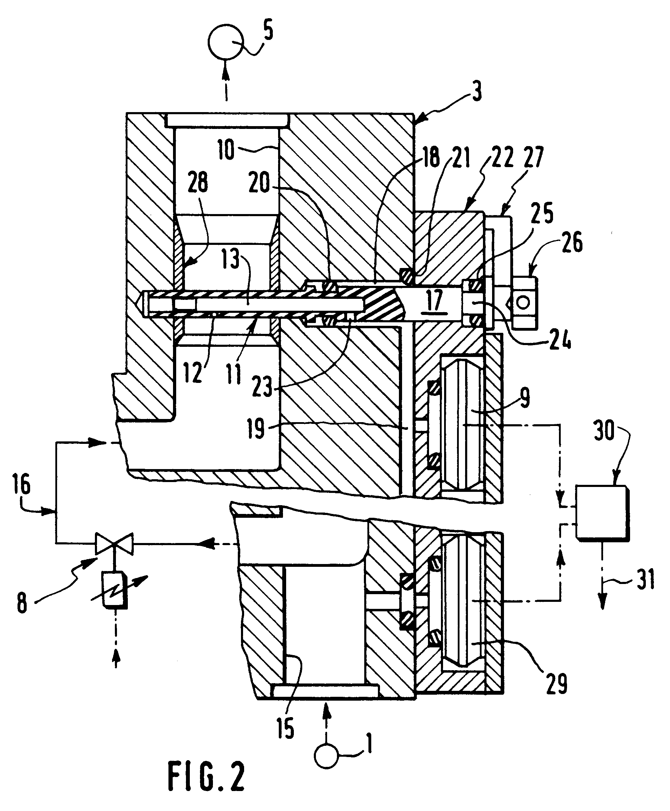

On a représenté sur la figure 3 un système de fourniture de gaz respiratoire à un passager d'aéronef comprenant essentiellement une source de gaz respiratoire 1 acheminé par un conduit d'amenée 2 à un bloc 3 de régulation de la pression du gaz respiratoire délivré par une portion de ligne ou "chenille" 4 à un masque respiratoire 5. La chenille 4 et le masque 5 constituent un sous-ensemble amovible qui est généralement propre à l'utilisateur et, pour des raisons d'encombrement et d'implantation, le bloc 3 est incorporé dans un sous-ensemble de distribution 6 monté sur l'embase 7 du siège de l'utilisateur, par exemple un siège éjectable. Pour ces raisons, comme on le voit sur la figure 2, la vanne de régulation 8, par exemple une électrovanne, et le capteur de pression 9 détectant la pression délivrée en aval de la vanne 8 doivent être incorporés dans le bloc 6, soit donc à une distance notable du poste utilisateur 5, avec les inconvénients sus-mentionnés de pertes de charge dans la tubulure 4.

Conformément à l'invention, dans une portion amont 10 de la ligne reliant la vanne 8 au poste utilisateur 5, on dispose une prise de pression orientable, constituée avantageusement par un tube 11 s'étendant transversalement dans la portion de ligne 10, perpendiculairement au flux F de gaz s'écoulant dans cette portion de ligne. Le tube 11 comporte dans sa partie située dans la portion de ligne 10, un orifice débouchant latéralement 12 et communiquant avec un passage longitudinal interne 13 débouchant, en 14, à l'extérieur du tube 11 pour être relié au capteur de pression 9 pilotant la vanne 8. De cette façon, en orientant angulairement le tube 11 de façon que l'orifice 12 soit décalé angulairement de l'axe de la portion de conduit 10 d'un angle $\theta$, la pression lue par le capteur sera modifiée selon la valeur de $\theta$. Si $P_{am}$ est la pression dynamique correspondant à $\theta = 0$, la pression lue P sera telle que :

$$\frac{P - P_{amont}}{\frac{1}{2}\rho Vo^2} = 1 - 4\sin^2\theta$$

On voit que quand $\theta$ varie entre 0 et 90°, le coefficient de pression varie entre + 1 et -2,5 environ. Si K est le coefficient de perte de charge dans la ligne entre le point de prise de pression et le poste utilisateur, la pression $P_u$ au poste utilisateur est telle que :

$$P_{am} - P_u = K \times \tfrac{1}{2}\rho \, Vo^2$$

ce qui veut dire qu'il suffit, pour simuler la perte de charge, de régler $\theta$ de façon que :

$$K = 4\sin^2\theta - 1$$

c'est-à-dire de sélectionner $\theta$ entre 30 et 90°.

Dans le mode de réalisation représenté sur la figure 2, le bloc 3 comporte un passage d'entrée 15 relié à la source de gaz 1, la portion de conduit 10, reliée au poste utilisateur 5 et dans laquelle est disposé le tube 11, et une portion de circuit 16, incorporant la vanne 8, reliant le passage 15 à la portion de conduit 10.

Le tube 11 est formé par une portion d'extrémité creuse d'une pièce cylindrique 17 montée à rotation dans le corps 3 et comprenant une partie intermédiaire reçue de façon étanche dans une chambre 18 communiquant, par un passage 19, avec le capteur 9, la chambre 18 et le passage 19 étant étanchéifiés par un joint torique 20 entre la pièce cylindrique 17 et la chambre 18, et un joint 21 entre le corps 3 et une platine 22 rapportée dans le corps 3 et dans laquelle est monté le capteur 9. Le passage intérieur 13 du tube 11 communique avec la chambre 18 par un autre passage radial 23. La pièce cylindrique 17 comporte, à l'opposé du tube 11, une partie d'extrémité 24 s'étendant à l'extérieur de la platine 22, en étant étanchéifiée par un joint torique 25 et se termine par une tête d'actionnement 26, un organe de verrouillage déverrouillable 27 permettant de bloquer la pièce cylindrique 17 dans la position angulaire requise. Le réglage s'effectue en atelier en branchant à la sortie de la portion de conduit 10 une tubulure ayant les caractéristiques standard de la tubulure 4 qui y sera ultérieurement connectée et la tête de manoeuvre 26 est actionnée de façon à obtenir au poste utilisateur 5 les conditions requises, après quoi la pièce cylindrique 17 est bloquée dans la position angulaire ainsi obtenue.

Comme on le voit sur la figure 2, conformément à un aspect de l'invention, pour obtenir une plage de compensation plus importante, le tube 11 traverse à tourillonnement un insert 28 disposé dans la portion de conduit 10 et formant un profil convergent/col/ divergent, pour accélérer localement le flux de gaz au droit de la prise de pression 12.

Comme on le voit sur la figure 2, le système de fourniture de gaz respiratoire comporte en outre, dans la platine 22, au moins un autre capteur de pression 29 détectant la pression d'entrée dans le passage d'entrée 15, les capteurs 9 et 29 fournissant des signaux de pression à une logique de commande 30 commandant, par un circuit 31, l'électrovanne de régulation 8, qui est avantageusement une électrovanne trois voies du type décrit dans la demande de brevet français 9101736, intitulée "Valve de régulation pneumatique" déposée ce même jour par la Demanderesse.

## Revendications

1. Dispositif de régulation de pression de gaz délivré à un poste utilisateur (5) à partir d'une source de gaz (1), comprenant une vanne de régulation (8) interposée dans une ligne de fourniture de gaz (15, 16, 10), un capteur de pression (9) relié à un point de la ligne en aval de la vanne, et une logique de commande (30) actionnant la vanne et recevant des signaux de pression en provenance du capteur (9), le capteur (9) étant relié à la ligne par une prise de pression (11), faisant saillie dans la ligne caractérisé en ce que la prise de pression est orientable angulairement par rapport au flux de gaz (F) dans la ligne.

2. Dispositif selon la revendication 1, caractérisé en ce que la prise de pression comprend un tube (11) disposé transversalement dans la ligne (10) et comportant au moins un orifice (12) dans sa paroi périphérique.

3. Dispositif selon la revendication 2, caractérisé en ce que le tube (11) est disposé dans un tronçon de ligne (28) présentant un profil intérieur convergent/divergent.

4. Dispositif selon la revendication 2 ou la revendication 3, caractérisé en ce que le tube (11) est monté à rotation dans un corps (3) définissant une portion (10) de la ligne et supportant le capteur de pression (9).

5. Dispositif selon la revendication 4, caractérisé en ce que le tube est formé par une portion d'extrémité creuse d'une pièce cylindrique (17) montée à rotation dans le corps (3) et comprenant une partie intermédiaire reçue de façon étanche dans une chambre (18) du corps communiquant avec le capteur (9) et comportant, dans sa paroi, au moins un passage (23) communiquant avec la partie d'extrémité creuse (11).

6. Dispositif selon la revendication 5, caractérisé en ce que la pièce cylindrique (17) comporte une seconde portion d'extrémité (24) faisant saillie hors du corps et pourvue d'un moyen d'actionnement (26).

7. Dispositif selon l'une des revendications 3 à 6, caractérisé en ce que le profil convergent/divergent est formé par un insert monté dans le corps (3).

8. Système de fourniture de gaz respiratoire à un passager d'aéronef, caractérisé en ce qu'il comprend un dispositif selon l'une des revendications précédentes.

9. Système selon la revendication 8, caractérisé en ce que le dispositif est monté sur le siège (7) du passager.

10. Procédé de régulation d'une pression de gaz délivré à un poste utilisateur (5), mettant en oeuvre une vanne de régulation (8) interposée dans une ligne de fourniture de gaz entre une source de gaz (1) et le poste utilisateur, et un capteur de pression (9) relié à une prise de pression (12) en un point de la ligne faisant saille dans la ligne en aval de la vanne et fournissant un signal de pression à une logique de commande (30) actionnant la vanne, caractérisé en ce qu'il comprend l'étape d'orienter la prise de pression (12) par rapport au flux (F) de gaz dans la ligne pour simuler la perte de charge dans la portion de ligne (4) entre la prise de pression et le poste utilisateur (5) et corriger ainsi la pression lue par le capteur (9).

**Claims**

1. Device for regulating the pressure of gas delivered to a user station (5) from a gas source (1), comprising a regulator valve (8) interposed in a gas supply line (15, 16, 10), a pressure sensor (9) connected to a point in the line downstream of the valve, and a control logic (30) actuating the valve and receiving pressure signals from the sensor (9), the sensor (9) being connected to the line by a pressure tapping (11), projecting into the line, characterised in that the pressure tapping is angularly orientable with respect to the gas flow (F) in the line.

2. Device according to Claim 1, characterised in that the pressure tapping comprises a tube (11) disposed transversely in the line (10) and having at least one orifice (12) in its peripheral wall.

3. Device according to Claim 2, characterised in that the tube (11) is disposed in a section of line (28) having a convergent/divergent internal profile.

4. Device according to Claim 2 or Claim 3, characterised in that the tube (11) is rotatably mounted in a body (3) defining a portion (10) of the line and supporting the pressure sensor (9).

5. Device according to Claim 4, characterised in that the tube is formed from a hollow end portion of a cylindrical component (17) rotatably mounted in the body (3) and comprising an intermediate part sealingly received in a chamber (18) in the body communicating with the sensor (9) and having, in its wall, at least one passage (23) communicating with the hollow end part (11).

6. Device according to Claim 5, characterised in that the cylindrical component (17) has a second end portion (24) projecting from the body and provided with an actuation means (26).

7. Device according to one of Claims 3 to 6, characterised in that the convergent/divergent profile is formed by an insert mounted in the body (3).

8. System for supplying respiratory gas to an aircraft passenger, characterised in that it comprises a device according to one of the preceding claims.

9. System according to Claim 8, characterised in that the device is mounted on the passenger seat (7).

10. Method for regulating a gas pressure delivered to a user station (5), making use of a regulator valve (8) interposed in a gas supply line between a gas source (1) and the user station, and a pressure sensor (9) connected to a pressure tapping (12) at a point in the line projecting into the line downstream of the valve and supplying a pressure signal to a control logic (30) actuating the valve, characterised in that it comprises the step of orienting the pressure tapping (12) with respect to the gas flow (F) in the line in order to simulate the pressure drop in the portion of line (4) between the pressure tapping and the user station (5) and thus correct the pressure read by the sensor (9).

**Patentansprüche**

1. Vorrichtung zur Druckregelung eines Gases, das einem Verbraucher (5) von einer Gasquelle (1) zugeführt wird, mit einem Regelventil (8), das in eine Gaszufuhrleitung (15, 16, 10) geschaltet ist, einem Drucksensor (9), der mit einem Punkt der Leitung stromab von dem Ventil verbunden ist, und einer Steuerlogikschaltung (30), die das Ventil betätigt und Drucksignale von dem Sensor (9) empfängt, wobei der Sensor (9) über eine in die Leitung ragende Druckanzapfung (11) mit der Leitung verbunden ist, dadurch gekennzeichnet, daß die Druckanzapfung in bezug auf den Gasstrom (F) in der Leitung winkelmäßig orientierbar ist.

2. Vorrichtung nach Anspruch 1, dadurch gekennzeichnet, daß die Druckanzapfung ein Rohr (11) umfaßt, das in der Leitung (10) in Querrichtung angeordnet ist und mindestens eine Öffnung (12) in seiner Umfangswand aufweist.

3. Vorrichtung nach Anspruch 2, dadurch gekennzeichnet, daß das Rohr (11) in einem Leitungsabschnitt (28) angeordnet ist, der ein konvergierendes/divergierendes Innenprofil hat.

4. Vorrichtung nach Anspruch 2 oder 3, dadurch gekennzeichnet, daß das Rohr (11) in einem Gehäuse (3), das einen Teil (10) der Leitung bildet und den Drucksensor (9) hält, drehbar gelagert ist.

5. Vorrichtung nach Anspruch 4, dadurch gekennzeichnet, daß das Rohr aus einem hohlen Endabschnitt eines zylindrischen Teils (17) besteht, das in dem Gehäuse (3) drehbar gelagert ist und einen Zwischenteil aufweist, der in einer mit dem Sensor (9) kommunizierenden Kammer (18) des Gehäuses abdichtend aufgenommen ist und in seiner Wand mindestens einen Durchtritt (23) aufweist, der mit dem hohlen Endabschnitt (11) kommuniziert.

6. Vorrichtung nach Anspruch 5, dadurch gekennzeichnet, daß das zylindrische Teil (17) einen zweiten Endabschnitt (24) aufweist, der aus dem Gehäuse herausragt und mit einer Betätigungseinrichtung (26) versehen ist.

7. Vorrichtung nach einem der Ansprüche 3 bis 6, dadurch gekennzeichnet, daß das konvergierende/divergierende Profil aus einem in dem Körper (3) montierten Einsatz besteht.

8. System zur Versorgung eines Raumschiffpassagiers mit Atmungsgas, dadurch gekennzeichnet, daß es eine Vorrichtung nach einem der vorhergehenden Ansprüche aufweist.

9. System nach Anspruch 8, dadurch gekennzeichnet, daß die Vorrichtung auf dem Sitz (7) des Passagiers montiert ist.

10. Verfahren zur Regelung des Drucks eines Gases, das einem Verbraucher (5) zugeführt wird, wobei das Verfahren ein Regelungsventil (8), das in einer Gaszufuhrleitung zwischen einer Gasquelle (1) und dem Verbraucher geschaltet ist, und einen Drucksensor (9) verwendet, der mit einer in die Leitung ragenden Druckanzapfung (12) in einem Punkt der Leitung stromab von dem Ventil verbunden ist und einer Steuerlogikschaltung (30) ein Drucksignal zuführt, die das Ventil betätigt, dadurch gekennzeichnet, daß das Verfahren einen Schritt zur Orientierung der Druckanzapfung (12) in bezug auf den Gasstrom (F) in der Leitung aufweist, um den Druckabfall in dem Leitungsteil (4) zwischen der Druckanzapfung und dem Verbraucher (5) zu simulieren und somit den von dem Sensor (9) gelesenen Druck zu korrigieren.

FIG.1

FIG.3

FIG.2